Europäisches Patentamt

European Patent Office

Office européen des brevets

(19)

(11) Veröffentlichungsnummer : **0 214 191**
**B1**

(12) **EUROPÄISCHE PATENTSCHRIFT**

(45) Veröffentlichungstag der Patentschrift :
**11.10.89**

(21) Anmeldenummer : **86901341.7**

(22) Anmeldetag : **17.02.86**

(86) Internationale Anmeldenummer :
**PCT/DE 86/00058**

(87) Internationale Veröffentlichungsnummer :
**WO/8604943 (28.08.86 Gazette 86/19)**

(51) Int. Cl.⁴ : **E 02 D 31/00, B 09 B 1/00**

(54) ABDICHTUNGSSCHIRM FÜR DEPONIEN.

(30) Priorität : **19.02.85 DE 3505687**

(43) Veröffentlichungstag der Anmeldung :
**18.03.87 Patentblatt 87/12**

(45) Bekanntmachung des Hinweises auf die Patenterteilung : **11.10.89 Patentblatt 89/41**

(84) Benannte Vertragsstaaten :
**AT BE CH DE FR GB IT LI LU NL SE**

(56) Entgegenhaltungen :
**EP–A– 0 130 773**
**DE–A– 3 041 706**
**DE–A– 3 415 729**

(73) Patentinhaber : **Bilfinger + Berger Bauaktiengesells-**
**chaft**
**Carl-Reiss-Platz 1-5**
**D-6800 Mannheim 1 (DE)**

**BASF Aktiengesellschaft**
**Carl-Bosch-Strasse 38**
**D-6700 Ludwigshafen (DE)**

(72) Erfinder : **BRÜGGEMANN, Heinrich**
**Heidelberger Strasse 7**
**D-6945 Hirschberg (DE)**
Erfinder : **HERZHAUSER, Manfred**
**Tiroler Strasse 32**
**D-6700 Ludwigshafen/Rhein (DE)**
Erfinder : **KOCHENDOERFER, Gottfried**
**Am Kirschberg 5**
**D-6719 Weisenheim am Berg (DE)**
Erfinder : **KRUBASIK, Klaus**
**Hammelstalstrasse 11**
**D-6702 Bad Dürkheim (DE)**

(74) Vertreter : **Ratzel, Gerhard, Dr.**
**Seckenheimer Strasse 36a**
**D-6800 Mannheim 1 (DE)**

EP 0 214 191 B1

## Beschreibung

Die Erfindung betrifft einen Abdichtungsschirm für Deponien z. B. Mülledponien, enthaltend eine Kontrollfilterschicht, die zur Kontrolle der Abdichtung dient und Mitteln zur bereichsweisen Feststellung von Leckagen.

Abdichtungsschirme für neu anzulegende Deponien sind in vielfältiger Weise bekannt. In der DE-OS 30 44 436 ist ein Abdichtungsschirm beschrieben, der aus Wasser und Asche, insbesondere Kraftwerksasche, hergestellt wird. Aus der DE-AS 26 30 345 ist ein Verfahren bekannt, bei dem eine Kunststoff-Folie, die in feingemahlenes Schüttgut eingebettet wird, als Abdichtungsschirm verwendet wird. Desweiteren sind Abdichtungsschirme bekannt, die aus natürlichen Mineralien wie z. B. Ton, hergestellt werden.

Zum nächstkommenden Stand der Technik ist das Dokument EP-A-0 130 773 zu nennen. Dieses Dokument beschreibt einen Behälter zur sicheren Aufbewahrung von gefährlichem Müll, wobei die Überwachung von Wasseraustritt oder von Giftstoffaustritt stattfindet. Dieser Behälter weist mehrere Schutzschichten auf, die den gefährlichen Müll umfassen, ferner ist eine mechanisch stabilisierende Außenwand vorgesehen. Aus dieser Literaturstelle ist eine Kontrollfilterschicht, die zur Kontrolle der Abdichtung dient, bekannt ; ferner sind aus dieser Literaturstelle auch bereits Mittel zur bereichsweisen Feststellung von Leckagen bekannt, da gegebenenfalls innerhalb dieses Behälters Trennwände und gesonderte Ableitungen für Wasser oder flüssige Giftstoffe für die von den jeweiligen Trennwänden eingeschlossenen Bereiche angeordnet sein können.

Demgegenüber betrifft vorliegende Erfindung keinen räumlich verhältnismäßig eng begrenzten Behälter, sondern einen Abdichtungsschirm für Deponien z. B. Mülldeponien, die räumlich sehr ausgedehnt sein können.

Ferner ist durch die Vorsehung von zwei Abdichtungsschichten, die in einem Abstand a voneinander eingebaut werden, eine sehr einfache und gleichzeitig wirkungsvolle ständige Überwachung der Kontrollfilterschicht möglich. Ferner liegt vorliegender Erfindung auch die Aufgabe zugrunde aufgetretene Leckagen durch Inbetriebnahme des Injektionsleitungssystems sofort zu beheben. Eine solche Möglichkeit besteht beim Behälter gemäß Dokument EP-A-0 130 773 nicht.

Die Anforderungen an neu anzulegende Deponien sind sehr streng. So wird heute nicht nur höchste Qualität und Sicherheit der Materialien und Bauverfahren für Abdichtungsschirme gefordert, sondern auch für nicht vorhersehbare Beschädigungen der Abdichtungsschirme eine schnelle, kostengünstige und sichere Reparierbarkeit. Unvorhersehbare Beschädigungen der Abdichtungsschirme können entstehen durch chemische Umwandlungsprozesse im deponierten Material, die sich über viele Jahre erstrecken, oder auch durch Beschädigungen bei der Ablagerung des Deponiematerials.

Die bisher bekannten Abdichtungsschirme ermöglichen nicht die schnelle und lokalisierte Feststellung einer Beschädigung und die schnelle, kostengünstige und sichere Reparierbarkeit. Die Reparatur von Abdichtungsschirmen der bekannten Art ist nur mit kosteninvensiven und langwierigen Baumaßnahmen möglich.

Demgegenüber liegt vorliegender Erfindung die Aufgabe zugrunde, einen Abdichtungsschirm zu schaffen, der eine schnelle und spezifische Auffindung von Beschädigungen gestattet, der ferner eine rasche und wirkungsvolle Beseitigung von Leckagen ermöglicht und eine langfristige Lagerung des Müllgutes und dessen Überwachung zu wirtschaftlichen Kosten gestattet.

Diese Aufgabe wird erfindungsgemäß bei einem Abdichtungsschirm der eingangs genannten Gattung dadurch gelöst, daß er weiterhin enthält a) zwei Abdichtungsschichten, die in einem Abstand a voneinander eingebaut sind und b) daß die Kontrollfilterschicht zwischen den Abdichtungsschichten angeordnet ist, c) ein Injektionsleitungssystem, das in die Kontrollfilterschicht eingebaut ist, d) ein zweites Leitungssystem innerhalb der Kontrollfilterschicht, das zunächst zur Kontrolle der Abdichtung dient und im Falle einer Injektion der Kontrollfilterschicht als Entlüftungs- und Entwässerungssystem dient, e) eine rasterförmige Einteilung des Abdichtungsschirmes in Einzelflächen, die jeweils gegen die benachbarten Einzelflächen durch abdichtende Verbindung der Abdichtungsschichten abgeschottet sind und über einen begehbaren Kontroll- und Sammelschacht oder einen begehbaren Tunnel mit einer Entwässerungsleitung verbunden sind, f) eine Drainschicht mit einem Drainageleitungssystem zur Ableitung von Sickerwasser aus den deponierten Stoffen und g) eine Abdeckschicht zum Schutze der Drainschicht beim Einbau der zu deponierenden Stoffe.

Besondere Ausführungsformen sind dadurch gekennzeichnet, daß das Injektionsleitungssystem mit Manschettenrohren hergestellt ist, daß das Injektionsleitungssystem aus Einzelschläuchen oder Einzelrohren mit je einem Endventil hergestellt ist, daß das Injektionsmaterial auf die aggressiven Abfallstoffe abgestimmt ist, daß der Abdichtungsschirm mehrschichtig ausgebildet ist, daß die Abdichtungsschichten aus mineralischen Stoffen bestehen.

Weitere besondere Ausführungsformen sind dadurch gekennzeichnet, daß die Abdichtungsschichten aus Kunststoff-Folien bestehen, daß der Abdichtungsschirm aus mineralischen Stoffen und der Abdichtungsschirm aus Kunststoff-Folien besteht oder umgekehrt, daß er horizontal, mit leichtem Gefälle, mit starkem Gefälle oder vertikal ausgeführt ist.

Die Erfindung bezieht sich weiterhin auf ein Verfahren zur Herstellung eines erfindungsgemäßen Abdichtungsschirmes, das dadurch gekennzeichnet ist, daß nach Fertigstellung des Abdichtungsschirmes und vor Inbetriebnahme der Deponie in der Kontrollfilterschicht zwecks Dichtigkeitsprüfung mittels Gas oder Flüssigkeit ein Über- oder Unterdruck gegenüber dem atmosphärischen Druck erzeugt wird.

Die Erfindung bezieht sich ferner auf ein Verfahren zur Prüfung des Abdichtungsschirmes, das dadurch gekennzeichnet ist, daß nach Inbetriebnahme der Deponie in der Kontrollfilterschicht zwecks Langzeit-Dichtigkeitsprüfung mittels Gas oder Flüssigkeit ein Über- oder Unterdruck gegenüber dem atmosphärischen Druck erzeugt wird.

Schließlich bezieht sich die Erfindung auch auf ein Verfahren zur Reparatur des Abdichtungsschirmes, das dadurch gekennzeichnet ist, daß nach Zerstörung der Abdichtungsschicht durch aggressive Abfallstoffe oder nach Beschädigung der Abdichtungsschicht durch unsachgemäße Ablagerung der Abfallstoffe die Kontrollfilterschicht über das Injektionsleitungssystem mit einem erhärtenden und abdichtenden Material verfüllt wird.

In den Zeichnungen sind einige Beispiele und Einzelheiten der Erfindung dargestellt :

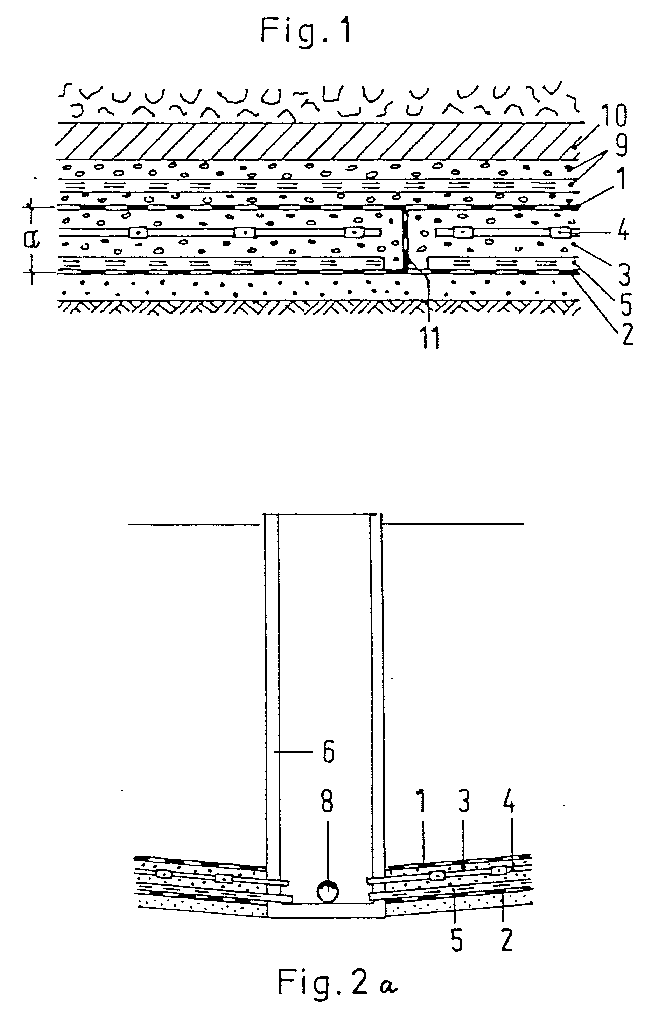

Figur 1 zeigt einen Schnitt durch den Abdichtungsschirm mit den in Anspruch 1 enthaltenen Elementen (1) bis (5) und (9) bis (11).

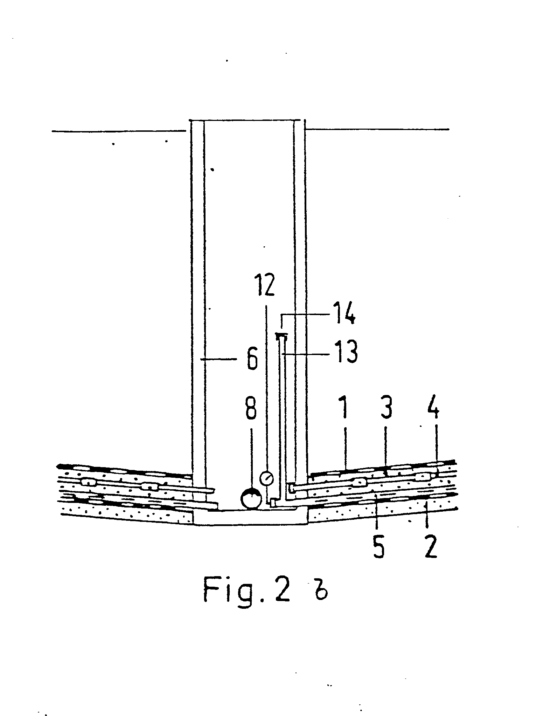

Figur 2a zeigt ein Ausführungsbeispiel mit dem Kontroll- und Sammelschacht (6).

Figur 2b zeigt ein Ausführungsbeispiel der Unterdruckprüfung mit dem Standrohr (13).

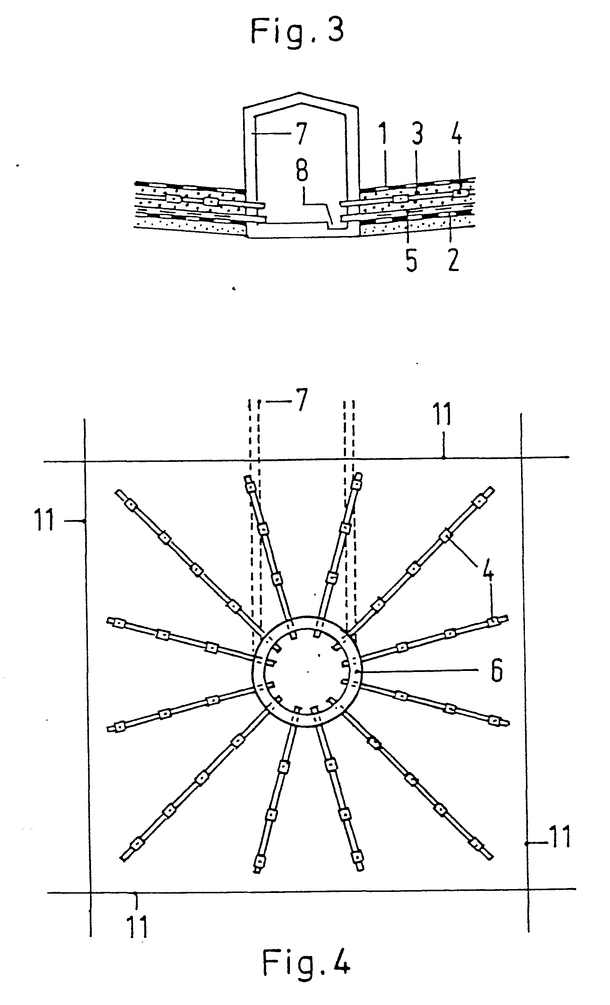

Figur 3 zeigt eine Ausführungsvariante mit einem Kontrolltunnel (7).

Figur 4 zeigt eine Grundrißdarstellung der rasterförmigen Flächenaufteilung des Abdichtungsschirmes mit den abdichtenden und abschottenden Verbindungen (11) zwischen den Dichtungsschichten (1) und (2).

Durch Einbau von zwei Abdichtungsschichten (1) und (2) ist die Sicherheit gegenüber einschichtigen Abdichtungsschirmen erhöht. Die Beschädigung der Abdichtungsschicht (1) wird kurzfristig festgestellt, da das im Deponiematerial vorhandene Sickerwasser sofort in die Kontrollfilterschicht (3) eindringt und über das Leitungssystem (5), den Sammelschacht (6) oder den Tunnel (7) gelangt, die regelmäßig inspiziert werden.

Durch rasterförmige und abgeschottete Einteilung der Einzelflächen ist der Schaden lokalisierbar. Über das vorhandene Injektionssystem (4) kann kurzfristig die Injektion und somit völlige Abdichtung der Kontrollfilterschicht (3) in den betroffenen Teilflächen erfolgen, womit die Dichtigkeit wieder hergestellt ist.

Außerdem ist ein Prüfverfahren vor Inbetriebnahme der Deponie vorgesehen, um Beschädigungen der Abdichtungsschichten (1) und (2) beim Einbau des Abdichtungsschirmes rechtzeitig festzustellen und reparieren zu können. Diese Prüfung wird zweckmäßigerweise vor dem Aufbringen der Drainageschicht (9) und der Abdeckungsschicht (10) vorgenommen und erfolgt abschnittsweise entsprechend der rasterförmigen Einteilung des Abdichtungsschirmes.

Zur Prüfung der Dichtungssohle werden die durch senkrechte Stege unterteilten Felder über luftdichte Anschlüsse an eine Vakuumpumpe angeschlossen und entlüftet. Der hierbei zwischen den beiden Dichtungsflächen entstehende Unterdruck wird über längere Zeit aufrecht erhalten, wobei ein etwa entstehender Druckanstieg nach Abschalten der Pumpe auf Undichtigkeit der Flächendichtung hinweist. Damit kann die in einzelne Abschnitte unterteilte gesamte Sohlfläche der Deponie unmittelbar nach ihrem Einbau auf Unversehrtheit hin überprüft werden. Der Unterdruck bzw. der Anstieg des Unterdruckes wird am Manometer 12 angezeigt.

Weiterhin ist ein Prüfverfahren, das nach Inbetriebnahme der Deponie durchgeführt werden kann, dargelegt ; Nach erfolgreicher Prüfung der Dichtungssohle und beginnender Überschüttung mit Deponiegut kann der zwischen den beiden Folien befindliche Zwischenraum, welcher mit Filterkies gefüllt ist, so mit Wasser aufgefüllt werden, daß sämtliche Poren wassergefüllt sind. Nach Füllung des Dichtungssystems kann über ein Standrohr 13, welches an die zwischen den Dichtungsbahnen befindliche Wasserfüllung angeschlossen ist, ein etwaiger Wasserverlust abgelesen werden. Damit ist eine Kontrollmöglichkeit für eine spätere laufende Überprüfung des Dichtungssystems gegeben.

Eine aufschraubbare Kappe 14 auf dem Standrohr 13 ermöglicht die oben erwähnte Unterdruckprüfung, ohne daß Fremdluft in das System zutritt.

## Patentansprüche

1. Abdichtungsschirm für Deponien z. B. Mülldeponien, enthaltend eine Kontrollfilterschicht, die zur Kontrolle der Abdichtung dient und Mitteln zur bereichsweisen Feststellung von Leckagen, gekennzeichnet durch,

a) zwei Abdichtungsschichten (1) und (2), die in einem Abstand a voneinander eingebaut sind,

b) die Anordnung der Kontrollfilterschicht (3) zwischen den Abdichtungsschichten (1) und (2),

c) ein Injektionsleitungssystem (4), das in die Kontrollfilterschicht (3) eingebaut ist,

d) ein zweites Leitungssystem (5) innerhalb der Kontrollfilterschicht, das zunächst zur Kontrolle der Abdichtung (1) dient und im Falle einer Injektion der Kontrollfilterschicht (3) als Entlüftungs- und Entwässerungssystem dient,

e) eine rasterförmige Einteilung des Abdichtungsschirmes in Einzelflächen, die jeweils gegen die benachbarten Einzelflächen durch abdichtende Verbindung (11) der Abdichtungsschichten (1) und (2) abgeschottet sind und über einen begehbaren Kontroll- und Sammelschacht (6) oder einen begehbaren Tunnel (7) mit einer Entwässerungsleitung (8) verbunden sind,

f) eine Drainschicht (9) mit einem Drainageleitungssystem zur Ableitung von Sickerwasser aus den deponierten Stoffen,

g) eine Abdeckschicht (10) zum Schutze der Drainschicht (9) beim Einbau der zu deponierenden Stoffe.

2. Abdichtungsschirm nach Anspruch 1, dadurch gekennzeichnet, daß das Injektionsleitungssystem (4) mit Manschettenrohren hergestellt ist.

3. Abdichtungsschirm nach Anspruch 1 bis 2, dadurch gekennzeichnet, daß das Injektionsleitungssystem (4) aus Einzelschläuchen oder Einzelrohren mit je einem Endventil hergestellt ist.

4. Abdichtungsschirm nach Anspruch 1 bis 3, dadurch gekennzeichnet, daß das Injektionsmaterial auf die aggressiven Abfallstoffe abgestimmt ist.

5. Abdichtungsschirm nach Anspruch 1 bis 4, dadurch gekennzeichnet, daß der Abdichtungsschirm mehrschichtig ausgebildet ist.

6. Abdichtungsschirm nach Anspruch 1 bis 5, dadurch gekennzeichnet, daß die Abdichtungsschichten (1) und (2) aus mineralischen Stoffen bestehen.

7. Abdichtungsschirm nach Anspruch 1 bis 6, dadurch gekennzeichnet, daß die Abdichtungsschichten (1) und (2) aus Kunststoff-Folien bestehen.

8. Abdichtungsschirm nach Anspruch 1 bis 7, dadurch gekennzeichnet, daß der Abdichtungsschirm (1) aus mineralischen Stoffen und der Abdichtungsschirm (2) aus Kunststoff-Folie besteht oder umgekehrt.

9. Abdichtungsschirm nach Anspruch 1 bis 8, dadurch gekennzeichnet, daß er horizontal, mit leichtem Gefälle, mit starkem Gefälle oder vertikal ausgeführt ist.

10. Verfahren zur Herstellung eines Abdichtungsschirmes nach Anspruch 1 bis 9, dadurch gekennzeichnet, daß nach Fertigstellung des Abdichtungsschirmes und vor Inbetriebnahme der Deponie in der Kontrollfilterschicht (3) zwecks Dichtigkeitsprüfung mittels Gas oder Flüssigkeit ein Über- oder Unterdruck gegenüber dem atmosphärischen Druck erzeugt wird.

11. Verfahren zur Prüfung eines Abdichtungsschirmes nach Anspruch 1 bis 10, dadurch gekennzeichnet, daß nach Inbetriebnahme der Deponie in der Kontrollfilterschicht (3) zwecks Langzeit-Dichtigkeitsprüfung mittels Gas oder Flüssigkeit ein Über- oder Unterdruck gegenüber dem atmosphärischen Druck erzeugt wird.

12. Verfahren zur Reparatur eines Abdichtungsschirmes nach Ansprüchen 1 bis 11, dadurch gekennzeichnet, daß nach Zerstörung der Abdichtungsschicht (1) durch aggressive Abfallstoffe oder nach Beschädigung der Abdichtungsschicht (1) durch unsachgemäße Ablagerung der Abfallstoffe die Kontrollfilterschicht (3) über das Injektionsleitungssystem (4) mit einem erhärtenden und abdichtenden Material verfüllt wird.

## Claims

1. A sealing shield for dumps, for example refuse dumps, comprising a monitoring filter layer, which serves for monitoring the seal, and means for zonal determination of leaks, characterised by

a) two sealing layers (1) and (2) which are installed at a distance a from each other,

b) the arrangement of the monitoring filter layer (3) between the sealing layers (1) and (2),

c) an injection ducting system (4) which is installed in the monitoring filter layer (3),

d) a second ducting system (5) within the monitoring filter layer (3) which initially serves for monitoring the seal (1) and in the event of an injection of the monitoring filter layer (3) serves as a ventilation and drainage system,

e) a grid-like division of the sealing shield into individual surfaces which are respectively divided into compartments relative to the adjacent individual surfaces by a fluid-tight connection (11) of the sealing layers (1) and (2), and are connected via an accessible monitoring and collecting shaft (6) or an accessible tunnel (7) to a drainage duct (8),

f) a draining layer (9) with a drain ducting system for diverting seepage water from the dumped materials,

g) a cover layer (10) for protecting the draining layer (9) when depositing the materials to be dumped.

2. A sealing shield according to Claim 1, characterised in that the injection ducting system (4) is formed with sleeve-type pipes.

3. A sealing shield according to Claims 1 and 2, characterised in that the injection ducting system (4) is formed from individual flexible tubes or individual pipes each with an end valve.

4. A sealing shield according to Claims 1 to 3, characterised in that the injection material is matched to the corrosive refuse materials.

5. A sealing shield according to Claims 1 to 4, characterised in that the sealing shield is of multilayer construction.

6. A sealing shield according to Claims 1 to 5, characterised in that the sealing layers (1) and (2) consist of mineral substances.

7. A sealing shield according to Claims 1 to 6, characterised in that the sealing layers (1) and (2) consists of plastics sheeting.

8. A sealing shield according to Claims 1 to 7, characterised in that the sealing shield (1) consists of mineral substances and the sealing shield (2) consists of plastics sheeting, or vice versa.

9. A sealing shield according to Claims 1 to 8, characterised in that it is formes horizontally, with a slight gradient, with a steep gradient or vertically.

10. A method for the construction of a sealing shield according to Claims 1 to 9, characterised in that, after completion of the sealing shield and before the dump is put into service, a pressure above or below atmospheric pressure is created by means of gas or liquid in the monitoring filter layer (3) for the purpose of testing fluid-tightness.

11. A method of testing a sealing shield according to Claims 1 to 10, characterised in that, after the dump has been put into service, a pressure above or below atmospheric pressure is created by means of gas or liquid for the purpose of long-term fluid-tightness testing.

12. A method of repairing a sealing shield according to Claims 1 to 11, characterised in that, following destruction of the sealing layer (1) by corrosive refuse materials or following damage to the sealing layer (1) as a result of improper depositing of the refuse materials, the monitoring filter layer (3) is filled via the injection ducting system (4) with a hardening and sealing substance.

**Revendications**

1. Ecran d'étanchéité pour décharges, par exemple d'ordures ménagères, comprenant une couche filtrante de contrôle qui sert au contrôle de l'étanchéité et des moyens pour détecter localement des fuites, caractérisé par :

a) deux couches d'étanchéité (1) et (2) qui sont incorporées à une distance a l'une de l'autre.

b) le fait de disposer la couche filtrante de contrôle (3) entre les couches d'étanchéité (1) et (2),

c) un système de conduites d'injection (4) qui est incorporé dans la couche filtrante de contrôle (3),

d) un second système de conduites (5) à l'intérieur de la couche filtrante de contrôle, qui sert d'abord au contrôle de l'étanchéité (1) et sert, dans le cas d'une injection de système d'évacuation d'air et d'eau à la couche filtrante de contrôle (3),

e) une subdivision en forme de quadrillage de l'écran d'étanchéité en surfaces individuelles qui sont séparées chacune des surfaces individuelles voisines par une liaison à effet d'étanchéité (11) des couches d'étanchéité (1) et (2) et sont reliées par un puits de contrôle et collecteur (6) accessible ou par un tunnel (7) accessible à une conduite d'évacuation d'eau (8),

f) une couche de drainage (9) avec un système de canalisations de drainage pour évacuer de l'eau d'infiltration des matières déposées,

g) une couche de recouvrement (10) pour la protection de la couche de drainage (9) lors de l'incorporation des matières à déposer.

2. Ecran d'étanchéité selon la revendication 1, caractérisé en ce que le système de conduites d'injection (4) est réalisé avec des joints tubulaires.

3. Ecran d'étanchéité selon les revendications 1 et 2, caractérisé en ce que le système de conduites d'injection (4) est réalisé à partir de tuyaux individuels ou tubes individuels comportant chacun une valve terminale.

4. Ecran d'étanchéité selon les revendications 1 à 3, caractérisé en ce que la matière d'injection est déterminée en fonction des déchets agressifs.

5. Ecran d'étanchéité selon les revendications 1 à 4, caractérisé en ce que l'écran d'étanchéité comporte plusieurs couches.

6. Ecran d'étanchéité selon les revendications 1 à 5, caractérisé en ce que les couches d'étanchéité (1) et (2) sont constituées par des matières minérales.

7. Ecran d'étanchéité selon les revendications 1 à 6, caractérisé en ce que les couches d'étanchéité (1) et (2) sont constituées par des feuilles de matière plastique.

8. Ecran d'étanchéité selon les revendications 1 à 7, caractérisé en ce que l'écran d'étanchéité (1) est constitué par des matières minérales et l'écran d'étanchéité (2) par une feuille de matière plastique, ou inversement.

9. Ecran d'étanchéité selon les revendications 1 à 8, caractérisé en ce qu'il est horizontal, présente une légère pente, présente une forte pente ou est vertical.

10. Procédé de fabrication d'un écran d'étanchéité selon les revendications 1 à 9, caractérisé en ce qu'après la fabrication de l'écran d'étanchéité et avant l'entrée en fonctionnement de la décharge, on produit dans la couche filtrante de contrôle (3), pour effectuer des contrôles d'étanchéité au moyen de gaz ou de liquide, une suppression ou une dépression par rapport à la pression atmosphérique.

11. Procédé de contrôle d'un écran d'étanchéité selon les revendications 1 à 10, caractérisé en ce qu'après l'entrée en fonctionnement de la décharge, on produit dans la couche filtrante de contrôle (3), pour des contrôles d'étanchéité à long terme au moyen de gaz ou de liquide, une surpression ou une dépression par rapport à la pression atmosphérique.

12. Procédé de réparation d'un écran d'étanchéité selon les revendications 1 à 11, caractérisé en ce qu'après la destruction de la couche d'étanchéité (1) par des déchets agressifs ou après la détérioration de la couche d'étanchéité (1) par dépôt inadéquat des déchets, on remplit la couche filtrante de contrôle (3) d'une matière durcissante et étanche au moyen du système de conduites d'injection (4).

EP 0 214 191 B1

# Fig.1

10
9
1
a
4
3
5
2
11

# Fig.2 a

6
8
1 3 4
5 2

1

Fig. 2 ᶾ

Fig. 3

7  8  1  3  4

5  2

7  11

11

4

6

11

11

Fig. 4